# EUROPEAN PATENT APPLICATION

(11) **EP 4 552 765 A1**
(43) Date of publication of application: **14.05.2025**
(21) Application number: 24212424.6
(22) Date of filing: 12.11.2024
(51) Int. Cl.: B22C 7/06, B22C 9/10, B22D 19/00, B22D 19/02, B22F 3/26, B22F 5/10, B22F 7/08, B33Y 80/00, B22C 23/00

(54) **IMPROVED METHOD OF MANUFACTURING PRODUCTS BY CASTING**

(30) Priority: 13.11.2023 IT 202300023946
(71) Applicant: FERRARI S.p.A., 41100 Modena (IT)
(72) Inventor: BONGIORNI, Lorenzo, 41100 MODENA (IT); ISEPPI, Daniele, 41100 MODENA (IT); PINNA, Franco Carlo, 41100 MODENA (IT)
(74) Representative: Studio Torta S.p.A.

(57) **Abstract**

A method of manufacturing a product (10) is described, the method comprising the steps of i) arranging a reinforcing element (12) inside a core box (20), ii) introducing a refractory material (21) inside the core box (20) so as to immerge at least part of the reinforcing element (12) in the refractory material (21), iii) manufacturing a core (30) from the refractory material (21) and the reinforcing element (12) arranged in the core box (20), iv) arranging the core (30) inside the cavity (41) of a mould (40) of the product (10), v) pouring a material in a molten state into the cavity (41) in such a way that it flows in contact with a portion (23) of the reinforcing element (12), wherein the portion (23) protrudes from the volume of refractory material (21) of the core (30), vi) removing the refractory material (21).

## Description

### CROSS-REFERENCE TO RELATED APPLICATIONS

This patent application claims priority from Italian patent application no. 102023000023946 filed on November 13, 2023, the entire disclosure of which is incorporated herein by reference.

### TECHNICAL FIELD

The present invention relates to a method of manufacturing products by casting.

### BACKGROUND

Foundry manufacturing methods, which involve casting a metal in the liquid state into the cavity of a mould substantially corresponding in shape to that of the product to be manufactured, are well known.

Products obtained by casting are widely used in all kinds of industries, including the automotive sector.

Specifically, with a view to improving the efficiency of motor vehicles and reducing their environmental impact, it has been observed that products obtained by the well-known casting manufacturing methods leave room for improvement, especially in terms of their mechanical strength.

In the light of the above, there is a need to improve the known casting manufacturing methods in order to increase the structural strength of the manufactured products.

An object of the invention is to meet the above need, preferably in a simple and inexpensive way.

### DESCRIPTION OF THE INVENTION

The object is achieved by means of a manufacturing method as defined in claim 1 and a component for a motor vehicle according to claim 11. The dependent claims define particular embodiments of the invention.

### BRIEF DESCRIPTION OF THE DRAWINGS

To better understand the invention, one embodiment thereof is described hereinafter by way of non-limiting example and with reference to the accompanying drawings, wherein:
- Figure 1 is a perspective view of a product manufactured with the manufacturing method according to the present invention;
- Figure 2 is a schematic, perspective view of a reinforcing element of the product shown in Figure 1;
- Figure 3 illustrates one step of the manufacturing method according to the present invention;
- Figure 4 is a perspective view of the product obtained at the end of the step illustrated in Figure 3;
- Figures 5 and 6 illustrate respective additional steps of the manufacturing method according to the present invention; and
- Figure 7 is a perspective and enlarged-scale cutaway of the product shown in Figure 1.

### EMBODIMENTS OF THE INVENTION

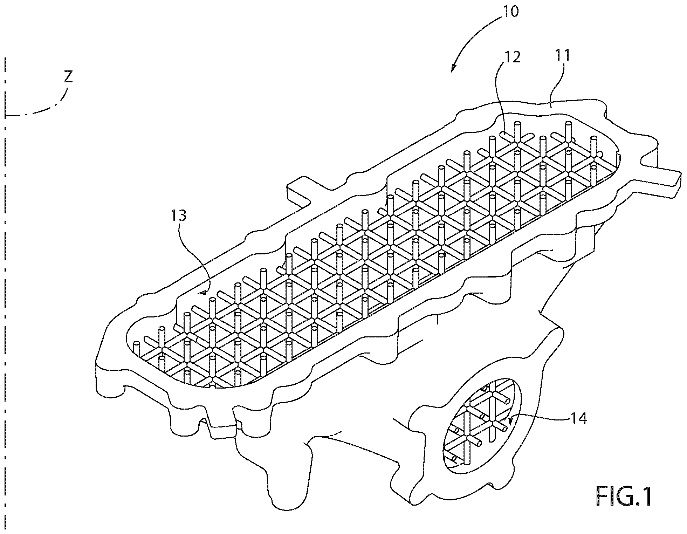

In Figure 1, reference number 10 is used to indicate, as a whole, a product obtained by means of the manufacturing method according to the present invention.

The product 10 comprises a main body 11 and a reinforcing element 12. Preferably, and without this implying any loss of generality, the product 10 is an automotive component, in particular a volume for an intake manifold.

In detail, the main body 11 and the reinforcing element 12 are integral with each other and form a single piece.

In the embodiment shown, the main body 11 defines a cavity 13, in which the reinforcing element 12 is arranged. The main body 11 also comprises a through opening 14. However, the reinforcing element 12 could be arranged partially inside and partially outside the cavity 13.

Preferably, the main body 11 and the reinforcing element 12 are made of metal, for example the same metal or metal alloy, or different metals or metal alloys.

In addition, as shown in Figure 1, the main body 11 has a cross-section progressively decreasing in size along a direction Z. In detail, the main body 11 has a funnel shape.

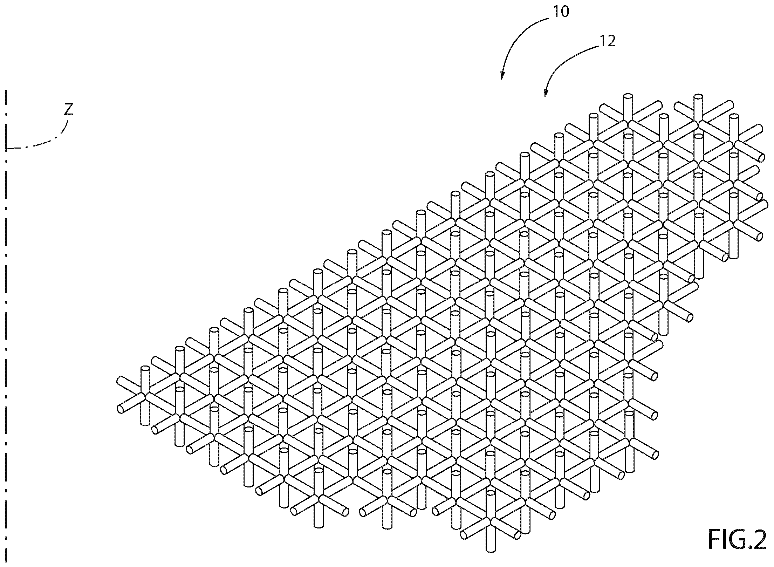

Figure 2 shows the reinforcing element 12 on an enlarged scale. In the embodiment shown, the reinforcing element 12 is a lattice structure comprising a plurality of repeated structural elements (e.g., truss elements).

In further detail, the reinforcing element 12 comprises a cubic-shaped elementary cell comprising, in turn, twelve rod-shaped structural elements, each arranged at a respective edge of the cubic shape and integral with each other. Furthermore, preferably, the reinforcing element 12 is arranged in relation to the main body 11 so that at least some structural elements of the lattice structure are arranged parallel to direction Z (Figure 1).

However, the reinforcing element 12 may have a geometry other than that illustrated. For example, the reinforcing element 12 could comprise gyroid-shaped surfaces or a repeated elementary cell of a shape other than cubic (tetrahedral, octahedral, dodecahedral, etc.).

Preferably, the reinforcing element 12 (specifically the lattice structure) is made by additive manufacturing, e.g. by selective laser melting of metal powders.

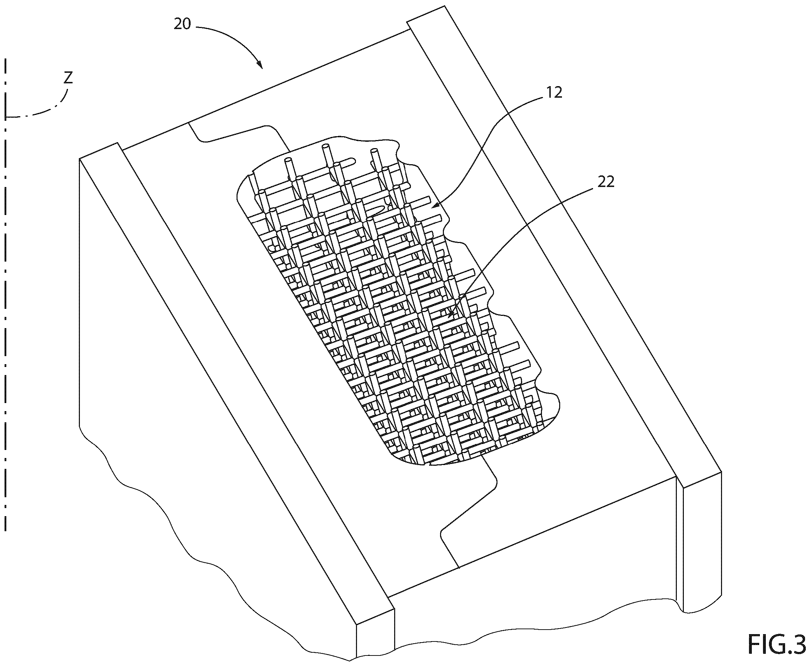

The manufacturing method first comprises the step of arranging the reinforcing element 12 inside a core box 20 (Figure 3). Specifically, the core box 20 corresponds or substantially corresponds in shape to the cavity 13 of the main body 11 and to the opening 14.

The manufacturing method further comprises the step of introducing a refractory material 21 inside the core box 20 so as to immerge at least a portion 22 of the reinforcing element 12 in the refractory material 21.

In detail, while the reinforcing element 12 is housed in the core box 20, the refractory material 21 is inserted into the interstices defined by the lattice structure.

Preferably, the refractory material 21 comprises foundry sand and a binder, such as a hardening resin, and is inserted into the core box 20 in a powdery and/or granular state.

Following insertion into the core box 20, the refractory material 21 is subjected to a hardening process, which has the aim of making it compact and making it adhere to the portion 22 of the reinforcing element 12. By way of example, the hardening process is of the "cold box" type.

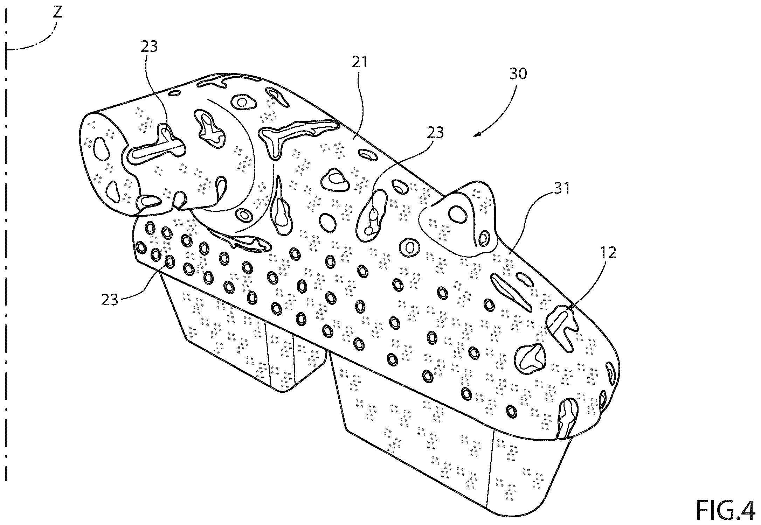

At the end of the hardening process, the assembly comprising the hardened refractory material 21 and the reinforcing element 12 defines a core 30. In detail, the core 30 comprises (Figure 4):
- a volume 31 of hardened refractory material enclosing the portion 22 of the reinforcing element 12;
- a portion 23 of the reinforcing element 12, which emerges and/or protrudes from the volume 31.

In other words, the portion 23 is free and not surrounded by the hardened refractory material 21. Specifically, the portion 23 comprises free ends of the lattice structure of the reinforcing element 12.

The portion 23 can be obtained by introducing the refractory material 21 into the core box 20, so that the reinforcing element 12 is completely immersed therein, and then uncovering the portion 23 from the volume 31 following the hardening process.

In further detail, the step in which the portion 23 is made to emerge from the volume 31 comprises removing a certain amount of hardened refractory material 21 at the portion 23, for example, manually.

Alternatively, the portion 23 can be obtained by only partially immersing the reinforcing element 12 in the refractory material 21 before the hardening process. In this way, the regions of the reinforcing element 12 not covered by the refractory material 21 during the hardening process will correspond to the portion 23 at the end of the hardening process. This is possible by using a core box 20 shaped such that at least some regions of the reinforcing element 12 cannot be completely surrounded and/or covered by the refractory material 21.

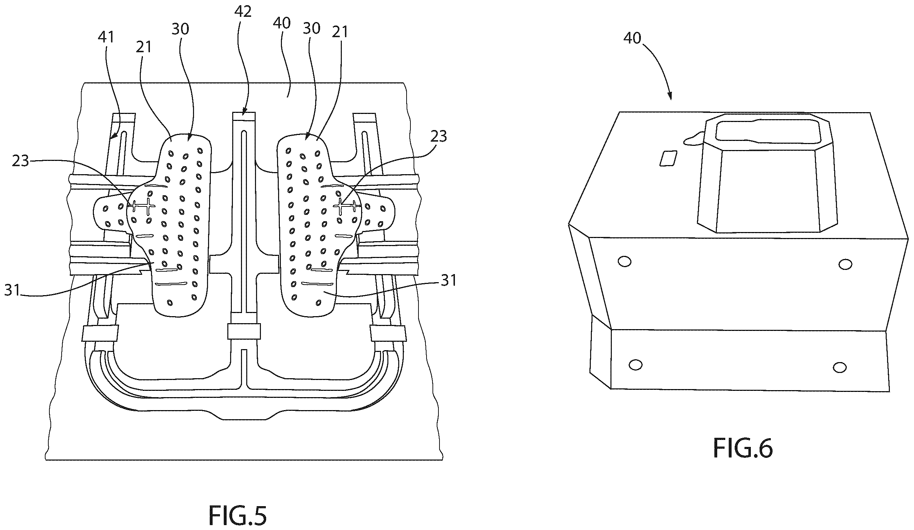

The manufacturing method also comprises the step of arranging the core 30 inside the cavity 41 of a mould 40 (Figure 5). In detail, the cavity 41 corresponds or substantially corresponds in shape to the main body 11, and the mould 40 comprises a plurality of pouring channels 42 designed to guide the material in a molten state to the cavity 41.

Also, in the embodiment shown, the mould 40 is a sand mould. Nevertheless, the manufacturing method could be implemented with a metal mould 40.

In further detail, the core 30 is arranged in the cavity 41 such that the portion 23 directly faces the cavity 41 and/or the pouring channels 42.

In the non-limiting embodiment shown, the mould 40 is configured to allow two products 10 to be manufactured at the same time. For this reason, Figure 5 shows two cores 30 arranged in the cavity 41.

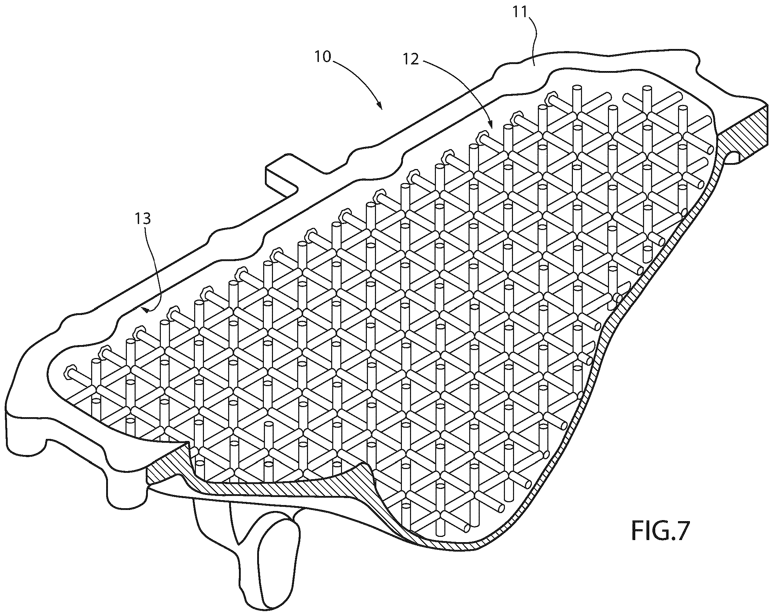

The manufacturing method also comprises the step of pouring the material in the molten state into the cavity 41, so that it flows in contact with the outermost surface of the volume 31 and with the portion 23 of the reinforcing element 12. In detail, the metal solidifying in the space of the cavity 41 left empty by the core 30 corresponds to the main body 11. In further detail, the metal solidifying in contact with the volume 31 defines the inner surfaces of the cavity 13, whereas the metal solidifying in contact with the portion 23 creates a joint between the reinforcing element 12 and the main body 11 (Figure 7).

Preferably but not necessarily, the metal poured into the cavity 41 causes the local melting of the portion 23. Otherwise, the metal poured into the cavity 41 may not cause the melting of the portion 23, similar to what happens in brazing processes.

In the embodiment shown, the metal is poured into the cavity 41 by gravity. Nevertheless, the metal in the molten state could be introduced into the cavity 41 by injection and/or centrifugal force.

The manufacturing method also comprises the step of removing from the mould 40 the casting obtained at the end of the casting and solidification of the metal and removing the refractory material 21 from the demoulded casting.

In detail, the removal of the hardened refractory material 21 occurs mechanically (for example, manually or by subjecting the demoulded casting to vibrations that allow the refractory material 21 to crumble) and/or by subjecting the demoulded casting to a heat treatment.

In further detail, the above-mentioned heat treatment comprises a step of heating the demoulded casting, for example in an oven, to a temperature such that the binder of the refractory material 21 is melted and/or evaporated. Specifically, this heating step should be long enough to ensure that all the binder of the refractory material 21 is melted and/or evaporated. For example, the melting/evaporation temperature of the binder is greater than or equal to 450°C.

At the end of the heat treatment, the refractory material 21 substantially comprises loose sand, which can be easily removed from the cavity 13.

Following or prior to the operations of removal of the refractory material 21, the casting removed from the mould 40 is subjected to operations of removal of the pouring channels.

In addition, following the operations of removal of the refractory material 21, the product 10 can be subjected to finishing operations, which comprise, for example, removal of casting burrs and sandblasting.

The advantages of the manufacturing method according to the invention are clear from the foregoing.

In particular, since the method involves the casting of a metal in the molten state around a core 30 reinforced by a reinforcing element 12, the structural strength of the product 10 is significantly increased compared to the strength of products obtained by means of the foundry methods discussed in the introductory part of this description, other process parameters being equal.

As the molten metal strikes and/or flows in contact with the portion 23 of the reinforcing element 12, the reinforcing element 12 is joined to the rest of the material solidifying within the mould 40.

Since the reinforcing element 12 has a lattice structure, the mechanical strength of the product 10 as a whole can be significantly increased in various directions. The heat exchange behaviour of the product 10 can also be significantly improved.

Moreover, the fact that the lattice structure is at least partially immersed in the hardened refractory material 21 during the demoulding of the product 10 at the end of the casting does not affect the demoulding operations. For the sake of completeness, it should be pointed out that the manufacture of a product comprising a lattice structure with the known foundry methods is very complex due to undercuts that would make demoulding difficult or even impossible.

Because the lattice structure can be manufactured by additive manufacturing, the reinforcing element 12 can have very different geometries.

Lastly, it is clear that modifications and variations may be made to the manufacturing method according to the invention, without however departing from the scope of protection defined by the claims.

The product 10 may comprise more than one reinforcing element 12. Consequently, the step of casting the molten metal would take place after inserting into the cavity 41 more than one core 30, each reinforced by a respective reinforcing element 12.

The main body 11 may have a shape other than that illustrated. For example, the main body 11 may include more than one opening 14, or it may not include any opening 14.

## Claims

1. A manufacturing method for manufacturing a product (10), **characterized in that** it comprises the steps of:
i) arranging a reinforcing element (12) inside a core box (20);
ii) introducing a refractory material (21) inside said core box (20) after said step i), so as to immerge at least part of said reinforcing element (12) in said refractory material (21);
iii) manufacturing a core (30) from said refractory material (21) and said reinforcing element (12) arranged in said core box (20); said core (30) at the end of said step iii) comprising a volume (31) of said refractory material (21) and a portion (23) of said reinforcing element (12), which emerges and/or protrudes from said volume (31);
iv) arranging said core (30) inside the cavity (41) of a mould (40) of said product (10);
v) pouring a material in a molten state into said cavity (41) in such a way that it flows in contact with said portion (23) of the reinforcing element (12); and
vi) removing the refractory material (21) from the product obtained at the end of step v).

2. The manufacturing method according to claim 1, wherein said reinforcing element (12) comprises a lattice structure.

3. The manufacturing method according to claim 2, comprising the step vii) of manufacturing said lattice structure of said reinforcing element (12) by additive manufacturing.

4. The manufacturing method according to any one of the foregoing claims, wherein said refractory material (21) comprises sand and a binder, and said step iii) comprises, in turn, the step viii) of subjecting said refractory material (21) introduced inside said core box (20) to a hardening process.

5. The manufacturing method according to claim 4, wherein during said step ii), said reinforcing element (12) is completely immersed in said refractory material (21), and said step iii) comprises the further step ix) of uncovering said portion (23) from said volume (31) of the hardened refractory material (21) following said step viii).

6. The manufacturing method according to claim 4, wherein during said steps ii) and viii), said reinforcing element (12) is only partially immersed in said refractory material (21).

7. The manufacturing method according to any one of claims 4 to 6, wherein said step vi) comprises at least one of the steps of:
x) mechanically removing said hardened refractory material (21) following said step viii);
xi) heating said hardened refractory material (21) following said step viii) at a temperature greater than or equal to the melting temperature or evaporation temperature of said binder for a given time interval.

8. The manufacturing method according to any one of the foregoing claims, wherein the product obtained at the end of said step v) comprises:
- a main body (11) corresponding to the material poured during said step v) and solidified; and
- said reinforcing element (12);
wherein said main body (11) and said reinforcing element (12) are jointed to each other at said second portion (23).

9. The manufacturing method according to claim 8, wherein the material poured during said step v) is a first metal or a first metal alloy, and said reinforcing element (12) is manufactured from a second metal or a second metal alloy;
wherein said first metal or said first metal alloy is equal to or different from said second metal or second metal alloy.

10. The manufacturing method according to any one of the foregoing claims, wherein the product obtained at the end of said step vi) is subjected to a step xii) of removing casting burrs and/or a sandblasting step xiii).

11. A component (10) for a motor vehicle comprising:
- a main body (11) comprising a cavity (13); and
- a reinforcing element (12) integral with said main body (11) and arranged at least partially inside said cavity (13) ;
wherein said reinforcing element (12) comprises a lattice structure.

12. The component according to claim 11, wherein said lattice structure is manufactured by additive manufacturing.

13. The component (10) for a motor vehicle obtained with the manufacturing method according to any one of claims 1 to 10.
